# EUROPEAN PATENT APPLICATION

(11) **EP 2 259 225 A1**
(43) Date of publication of application: **08.12.2010**
(21) Application number: 09305503.6
(22) Date of filing: 01.06.2009
(51) Int. Cl.: G06T 17/00

(54) **Automatic 3D object recommendation device in a personal physical environment**

(71) Applicant: Alcatel Lucent, 75008 Paris (FR)
(72) Inventor: Betge Brezetz, Stéphane, 91620, NOZAY (FR); Picault, Jérome, 91620, NOZAY (FR); Kostadinov, Dimitre Davidov, 91620, NOZAY (FR); Senot, Christophe, 91620, NOZAY (FR)
(74) Representative: Hedarchet, Stéphane

(57) **Abstract**

The invention relates to a device for delivering recommendation messages in order to suggest a user some placement of the object in the 3D environment of the user, comprising:
- object presence indication means for indicating the presence of the object in the vicinity of the user,
- object interaction means for managing the interaction with the object as a function of an active or passive mode triggered respectively by the user or by the object,
- physical object classification means for classifying the object in interaction with the user in an object ontology,
- abject matching evaluation means for evaluating whether the object fits the user preferences and his home constraints,
- means for providing selected objects positioned in his 3D environment.

## Description

The present invention is related to a device for delivering recommendation messages in order to suggest a user some placement of the object in the 3D environment of the user

It is known, In the state of the art, commercial web sites with 3D rendering of objects (e.g., www.new3s.com/e-commerce-3d). However, these web sites only offer 3D object visualization. There are no selection and recommendation features relying on a positioning of the object (using its 3D model) in the end-user home or environment.

Another example of 3D model of objects is the models done thanks to Google SketchUp™ (http://sketchup.google.com), used for example to model an IKEA™ furniture:
http://sketchup.google.com/3dwarehouse/details?mid=5d5f0493a98b6fd818e3dae6 0a67b8c8

The models (including dimensions, etc.) can be exported in XML-like syntax, therefore can be easily exploited by 3^{rd} parties, and contain all the details in terms of shape, dimensions, texture, color, etc. Many real-world objects have already been modeled like this (which proves the feasibility), but these models are currently under-used, as they rely on manual processing. Users may already use these models together with one of their house that they can easily build themselves in order to model completely their home. However 1) recommendations of content does not exist, 2) there is no semantics associated to these models resulting as a missed opportunity from user's and business perspectives

As such, this kind of technology is rather an enabler of the present invention rather than a campetitar/prior art. In addition, the SketchUp search interface proposes "other models you might like", through. These suggestions seem to be based on the similarity of the shape only, and does not include external constraints such as the own user's home environment or the user profile in terms of preferences of colors, style, etc.

The technical problem raises from the fact that, in a shop, it is difficult for an end-user to evaluate that an object (e.g., a furniture) actually fits with his home constraints (e.g., room dimensions, position of existing objects) as well as his preferences (e.g., style of the object such as classic, trendy, ... with respect to his other objects present in his home).

Moreover, the user is not necessary aware of the presence of possible objects (possibly close to him) he would like to buy and that match these constraints and preferences.

In general, when a consumer goes for instance to a furniture shop, the shopping is done in several phases:
- preliminary inspections (find interesting products or ideas),
- projection (how objects found through preliminary inspections fit into the user environment)
- reflexion and purchase decision.

The present invention described in the present application aims at helping the user mainly in the phase 1 - preliminary inspections through proactive recommendations and also in phase 2 - projection (through visual presentation of the objects in their environment).

The object of the present invention, according to an embodiment, is a device for delivering recommendation messages in order to suggest a user some placement of the object in the 3D environment of the user, comprising:
- object presence indication means for indicating the presence of the object in the vicinity of the user,
- object interaction means for managing the interaction with the object as a function of an active or passive mode triggered respectively by the user or by the object,
- physical object classification means for classifying the object in interaction with the user in an object ontology,
- object matching evaluation means for evaluating whether the object fits the user preferences and his home constraints,
- means for providing selected objects positioned in his 3D environment.

Thus the invention allows to automatically recommend objects (wanted by the end-user) that fit with the user profile/preferences and constraints of his home environment. Besides, the invention allows the user to visualize and appreciate the different possible arrangements of this object in his home environment.

The invention allows a direct interaction with real objects (e.g., in a shop) either actively (e.g., the user is "touching" the object with his mobile) or passively (e.g., an object -close to the user- pro-actively alerts the end-user that it may correspond to his expectations).

Other objects and further features of the present invention will be apparent from the following detailed description when read in conjunction with the accompanying drawing:

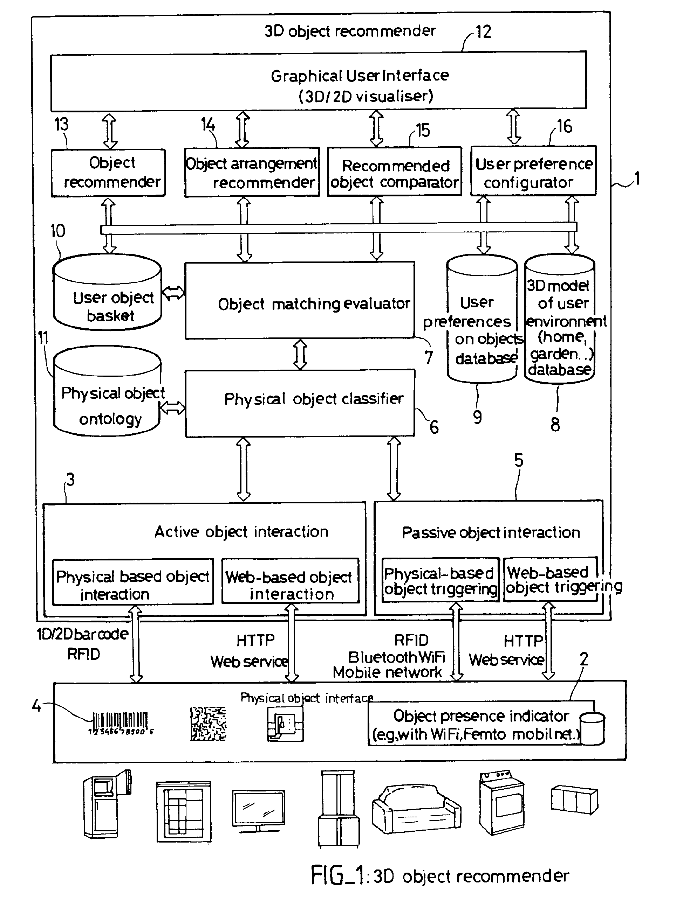

Fig. 1 schematically illustrates a device for 3D object recommendation according to an embodiment of the invention.

A description will hereinafter be given of embodiments of the present invention, by referring to the drawings.

As shown in the figure 1, the 3D object recommendation device 1 allows to send recommendation messages concerning an object to the user by automatically suggesting some placement of this object in the 3D environment of the user.

More precisely, the 3D object recommender 1 comprises the different functional blocks as described below:
At first, an object may be identified in various ways:
   - The object may have a tag stuck on it which may be detected via scanning detection methods (in case of e.g. 1 D bar code, 2D bar code) or via RF detection methods (e.g. RFID).
   - The object may also be identified indirectly with a service (configured by the end-user) that uses a classical mobile network (e.g., WiFi, Femto, 2G/3G network) to indicate its presence. This service is provided by the Object presence indicator 2 (cf Fig. 1). It has to be noted that the information sent by this indicator 2 also includes the object location (with a certain precision).

This 3D object recommender 1 may be used in two modes:
- *Active mode:* the user decides to interact with an object in order to have more information on how this object fits with his environment and preferences.
- *Passive mode:* an object -possibly close to the user- triggers its presence to the user and the 3D recommender 1 provides information on how this object fits with his home environment.

As a consequence, the 3D recommender 1 comprises an active object interaction module 3: this module 3 is in charge to manage the object interaction performed at the initiative of the end-user (i.e. active mode). The user can request and get object information in two ways:
- with a physical-based interaction with the object; e.g., by approaching his RFID-enabled mobile phone close to the RFID of the object or while reading the 1 D/2D object bar code with his mobile phone camera. The physical-based object interaction may get the 3D object information stored directly in the RFID or bar code. Alternatively, the RFID or bar code may also contain a reference (e.g., web site, web service) to get these 3D object information.
- with a web-based interaction with the object; e.g., by making - with his mobile phone- an HTTP or web service request directly to a web site describing the object (via a transmission channel well known by the Man skilled in the Art).

The 3D recommender 1 comprises also a passive object interaction module 5: this module 5 is in charge to manage the object interaction performed at the "initiative of the object" (i.e. passive mode). In this latter mode, the object "notifies his presence" to the end-user. This object triggering can be done in two ways:
- physical-based object triggering; e.g., the RFID tag of the object is used to notify the object presence in the area of the user and to send the 3D object information.
- web-based object triggering; e.g., a web site notifies the 3D recommender 1 of an object close to the end-user and sends the related 3D information. This can be done by the object presence indicator 2 described previously.

The 3D recommender 1 comprises further a physical object classification module 6 or classifier 6: this classifier 6 classifies the object in interaction with the user (either in passive or active mode) in a physical object ontology database 11. The following figure describes an example of such an object ontology:

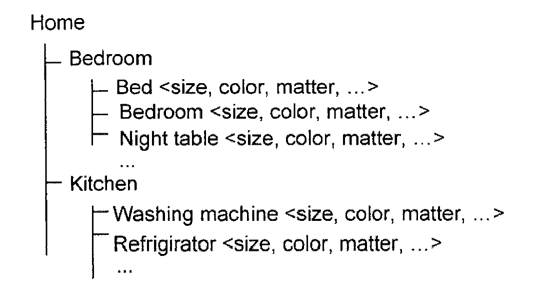

The ontology may also include constraints put by the objects with regards to their arrangement (such as free space needed around).

The 3D recommender 1 further comprises an object matching evaluation module or evaluator 7: this evaluator 7 evaluates if the detected object fits to the user preferences and home constraints. For this purpose, it uses:
- A database 8 containing the 3D model of the environment of the user (e.g., 3D description of each room of his home, of his furniture, their arrangements...). This model can be made manually with classical 3D modeling tool, they can also be semi-automatically constructed with a picture analysis- based system.
- A database 9 containing the preferences of the user expressed for the object he wants to acquire: their characteristics (size, color, shape, matter, brand ...), adjacencies constraints (e.g., object that must be close to another), etc. It has to be noted that preferences may also be set for the objects already hold by the user (e.g., objects that may move or not in his home).

If the object is compliant with these preferences and constraints, it is added in an user object basket 10.

The user can then visualize, with a Graphical User Interface 12, the selected objects that are positioned in his 3D environment. For this purpose, the three following entities are used:
- An object recommender 13: provides a ranked list of objects that may interest the end-user. Recommendations of objects can be done at several levels:
   ○ Objects recommended based for example on user style and similarities (or differences - depending on the semantics associated with objects) with objects already present in the user's environment (e.g. in terms of colors). In this case a content-based filtering algorithm can be used.
   ○ When a user is buying furniture, it is also very important to have complementary products (what fits with the selected ones in terms of style and space). In order to provide new ideas of object combinations to the user, it is possible to exploit knowledge the system has about other users' objects through a collaborative or social recommender to best exploit the accordance of one object with the other.
- An object arrangement recommender 14: provides different possible arrangements of these objects and allow the end-user to visualize them in his 3D environment. The arrangement exploits semantics associated to the object (ex. some objects put some arrangement constraints - ex. there should be a minimum of free space in front of a sofa or around a table). The object arrangement recommender can also take into account the usual way (learnt) the user arranges his environment: for example some users like to have "dense" environment, with a lot of furniture, whereas some others prefer something more spaced out. The object arrangement recommender should also take into account constraints of the room, such as windows, doors, origin of light, etc.
- A recommended object comparison module or comparator 15:
   provides means to compare different recommended objects or different recommended arrangements of these objects. Usually, there is not an absolute best object which outperforms the others according to all user preferences. In addition, the user often decides what to buy on the spur of the moment and is unable to give in advance his exact preferences. The role of this module 15 is to assist the user in taking the final decision by showing him both the advantages and disadvantages of each object. For example, if the result of a recommendation is two objects o1 and o2 and if o1 better matches the user preferences on style while o2 better matches the user preferences on arrangement, the arrangements of both objects can be displayed simultaneously on the GUI 12 in order to help the user in taking his final decision. This module 15 can also use multi-criteria decision making techniques which provide a partial or a total ordering of objects with respect to several criteria.

User preference configuration module or configurator 16: this module 16 allows the end-user to set the 3D model of his environment (e.g., by importing this model from a 3D modeling tool) and to configure his preferences both for the objects he has and the ones he wants to acquire.

Each object that is part of the 3D model of the user environment can be associated to some semantics describing the intention of the user with respect to these objects such as:
- Keep,
- can be moved (in the room, or in another room) in any case or only if necessary,
- should be replaced by a new one (of the same category or from another category),
- can be removed.

The users can describe each room using this semantic, saying for example that the washing machine can be replaced (in any case or if there is an opportunity under price x).

The present invention brings benefits at different levels:
- *User benefits* with time saving for the end-user. It helps in preparing the visit to the store, improved user experience in the store, and avoids to come several times (e.g. allow to combine phase 1 & 2 of purchase process: preliminary inspections and projection in the environment).
- *Technical benefits* in comparison to existing recommendation systems. Indeed, the invention provides significant advanced value through the object arrangement recommender (based on a 3D analysis of both the object and the user environment and preferences).
- *Business benefits* with opportunities to increase sales (in particular in the case of proactive recommendations leading to non-anticipated purchase decisions).

## Claims

1. Device for delivering recommendation messages in order to suggest a user some placement of the object in the 3D environment of the user, comprising:
- object presence indication means for indicating the presence of the object in the vicinity of the user,
- object interaction means for managing the interaction with the object as a function of an active or passive mode triggered respectively by the user or by the object,
- physical object classification means for classifying the object in interaction with the user in an object ontology,
- object matching evaluation means for evaluating whether the object fits the user preferences and his home constraints,
- means for providing selected objects positioned in his 3D environment.
